# EUROPEAN PATENT SPECIFICATION

(11) **EP 0 529 783 B1**
(45) Date of publication and mention of the grant of the patent: **13.09.1995**
(21) Application number: 92306194.9
(22) Date of filing: 06.07.1992
(51) Int. Cl.: B65G 15/08

(54) **Method of using cylindrical conveyor**
Benutzungsverfahren eines Schlauchförderers
Méthode d'utilisation d'un convoyeur tubulaire

(30) Priority: 30.08.1991 JP 244332/91
(43) Date of publication of application: 03.03.1993
(73) Proprietor: BRIDGESTONE CORPORATION, Tokyo 104 (JP)
(72) Inventor: Sumino, Shinichi, Yokohama City, Kanagawa Pref. (JP)
(74) Representative: Whalley, Kevin

(56) References cited:
- WO-A-88/04269
- PATENT ABSTRACTS OF JAPAN vol. 9, no. 179 (M-399)(1902) 24 July 1985

## Description

This invention relates to a method of using a cylindrical conveyor according to the preamble of claim 1 for transferring a substance in bulk by a conveyor belt held in a cylindrical shape particularly in a manner effectively preventing the transferring substance from falling out of the conveyor belt.

Such a known method of using a cylindrical conveyor has been disclosed, for example, in Japanese Patent Application Laid-open No. 60-48,808. In this disclosed method of the prior art, shape-holding rollers are so arranged that a conveyor belt is formed to have a vertically elongate elliptical section at a running portion curved in a horizontal plane and a horizontally elongate elliptical section at a running portion curved in a vertical plane. At a portion of the conveyor belt curved in an inclined plane, the shape-holding rollers are arranged so that the conveyor belt is flattened or collapsed on the side higher in tensile force. With this arrangement of the shape-holding rollers, there was described in the specification of the prior art that smaller radii of curvature of the conveyor belt can be adopted, and if compared with the same radii, the difference between tensile forces in the inside and outside of the curved portion of the conveyor belt becomes small, with consequent less chance of torsion or shifting of the conveyor belt.

In general, at a curved running portion of the conveyor, the conveyor belt held in the cylindrical shape tends to deform to have an elliptical section collapsed in radial directions of the curved running portion. As a result, the overlapping width of side edges of the conveyor belt at the curved running portion increases, while at the straight running portion of the conveyor, the conveyor belt is returned to its original cylindrical shape to reduce the overlapping width of the side edges.

At the curved running portion, therefore, the conveyor belt is considerably flattened or collapsed so that the side edge of the conveyor belt on the inner side of the overlapping portion penetrates into the substance to be transferred and the overlapping portion and its proximity are brought into contact with the substance, causing the substance to penetrate between the side edges of the overlapping portion of the conveyor belt. Consequently, when the conveyor belt moves from the curved running portion to the straight running portion of the conveyor or the substance is exhausted from the conveyor, the substance between the side edges of the conveyor belt falls out of the conveyor or scatters therearound. The prior art method described above could not overcome such a difficulty in a cylindrical conveyor.

It is a primary aim of the invention to provide an improved method of using a cylindrical conveyor, which is capable of sufficiently preventing a substance to be transferred from penetrating between side edges of the overlapping portion of a conveyor belt and hence from scattering around and falling out of the conveyor.

The present invention provides a method of using a cylindrical conveyor having straight running portions and curved running portions, the conveyor belt of which is provided with a plurality of shape-holding rollers to be held in a cylindrical form with overlapped side edges of the conveyor belt and is driven in a shape having straight portions and curved portions, characterized in that the length of a surrounding contour line in cross-section of the conveyor belt around a substance to be transferred is maintained substantially constant at any portion of the conveyor.

According to the method of the invention, the overlapping width of the conveyor belt at the curved portion is substantially equal to that at the straight running portion. Therefore, there is no risk of the side edge of the conveyor belt on the inner side of the overlapping portion penetrating into the substance to be transferred and further no risk of the conveyor belt being greatly flattened or collapsed to an extent such that the overlapping portion and its proximity are brought into contact with the substance. According to the invention, therefore, it is possible to substantially prevent the substance from penetrating between the side edges of the overlapping portion of the conveyor belt and hence to prevent the substance penetrated between the side edges of the conveyor belt from falling out of the conveyor or scattering therearound during transferring or when the substance is exhausted from the conveyor.

The term "flattened" or "collapsed" used herein is intended to designate that the cylindrical conveyor belt is deformed to a shape having an elliptical cross-section.

The invention will be further described, by way of example only, with reference to the accompanying drawings, in which:
Fig. 1 is a cross-sectional view of a cylindrical conveyor of one embodiment of the invention;
Fig. 2 is a front elevation illustrating a modification of the arrangement of shape-holding rollers according to the invention;
Fig. 3 is a view illustrating a preferable arrangement of centers of shape-holding rollers according to the invention;
Fig. 4 is a view illustrating an arrangement of rollers at a curved running portion in a horizontal plane according to the invention;
Fig. 5 is a view illustrating an arrangement of rollers at a curved running portion in an inclined plane according to the invention; and
Fig. 6 is a view illustrating a further embodiment of a conveyor arranged in an inclined plane according to the invention.

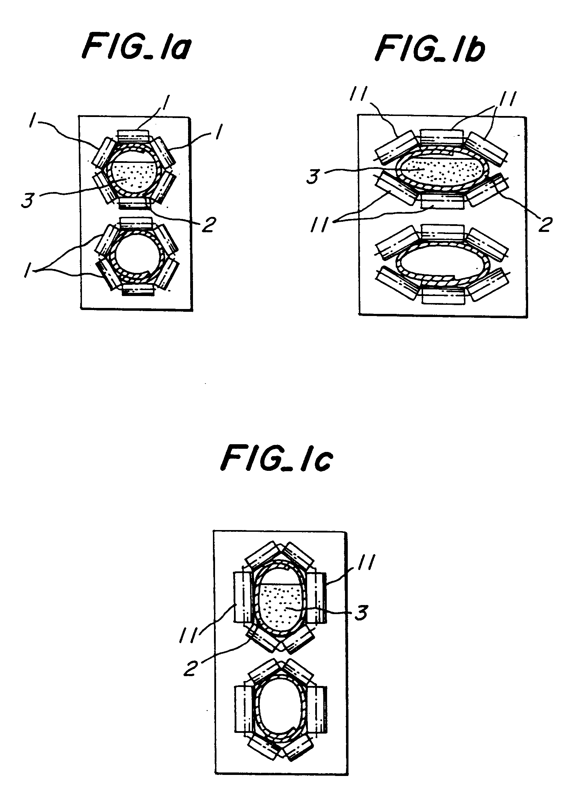

Referring to Fig. 1a illustrating in section the straight running portion of a cylindrical conveyor according to the invention, there are provided a plurality (for example, six) of shape-holding rollers 1 on each of the advancing and returning sides of the conveyor to form therein a surrounded space in the form of a substantially regular hexahedron. A conveyor belt 2 is inscribed with the shape-holding rollers 1 with its side edges overlapping with each other over a predetermined width, thereby obtaining a surrounding contour line of a predetermined length formed by the conveyor belt 2 for a substance 3 to be transferred. It will be appreciated that a plurality of sets of six shape-holding rollers 1 are arranged at intervals along the conveyor belt 2 at straight and curved running portions of conveyor.

In this case, the overlapping portion on the advancing side is positioned above the substance 3 to be transferred, while the overlapping portion on the returning side is positioned on the lower side. However, since on the returning side there is no risk of falling of the substance 3 and other problems even if the overlapping width is changed, the configuration and dimension of the surrounding contour line of the conveyor belt 2 may be suitably selected as required.

Figs. 1b and 1c illustrate, by way of example, cross-sections of the cylindrical conveyor shown in Fig. 1a at downwardly curved running portions in vertical planes. In Fig. 1b, two upper and lower rollers 11 are arranged in parallel with and closer to each other than the distance between the two upper and lower rollers at the straight portion shown in Fig. 1 so that the space having a hexagonal section surrounded by the rollers 11 is flattened or collapsed in vertical directions. With this arrangement, the force acting upon the curved running portion to flatten it can be released as a force expanding the conveyor belt in horizontal directions so that the surrounding contour line around the substance to be transferred is kept constant even though the conveyor belt is flattened in vertical directions.

At the curved running portion, in addition to the length of and distance between the two upper and lower rollers, intersecting angles of axes of the adjacent rollers with those of the upper and lower rollers and positions of these rollers are so selected that the conveyor belt 2 is not separated from the upper roller by an additional tensile force acting on the outer curved portion of the conveyor belt and the surrounding contour line around the substance to be transferred is substantially equal to that of the straight portion of the conveyor belt shown in Fig. 1a.

Therefore, the curved portion of the conveyor belt 2 inscribing the shape-holding rollers 11 has the flat cross-section collapsed in vertical directions but its overlapping width of the side edges of the conveyor belt 2 is substantially equal to that of the straight portion of the conveyor belt 2.

Fig. 1c illustrates another example of the cross-section of the cylindrical conveyor at a downwardly curved running portion in a vertical plane. In Fig. 1c, two shape-holding rollers 11 on left and right sides of the conveyor belt are arranged in parallel with and closer to each other than the distance between the two upper and lower rollers 11 at the straight running portion shown in Fig. 1a so that the space having a hexagonal section surrounded by the rollers 11 is flattened or collapsed in horizontal directions.

With the arrangement of the shape-holding rollers 11, the force acting upon the curved portion to flatten it in horizontal directions serves to bring the conveyor belt strongly into contact with the two shape-holding rollers 11 on both the left and right sides to push the conveyor belt 2 into vertical directions so that the conveyor belt 2 is flattened or collapsed in horizontal directions. In this case, likewise, the length of the surrounding contour line around the substance to be transferred is kept substantially constant even though the conveyor belt 2 is flattened or collapsed by suitably selecting positions and angles of the shape-holding rollers 11.

In more detail, two shape-holding rollers 11 extending parallel to each other on both sides of the conveyor belt 2 cause the conveyor belt 2 to be flattened, while the four remaining shape-holding rollers 11 restrain the conveyor belt 2 in vertical directions, thereby maintaining the overlapping width of the side edges of the conveyor belt 2 substantially equal to that of the straight portion of the conveyor belt 2. As a result, the overlapping side edges of the conveyor belt 2 are not separated from the shape-holding rollers 11 by the additional tensile force at the curved running portions and hence do not contact or penetrate into the substance to be transferred.

When the conveyor belt 2 is moved from the straight travelling state as shown in Fig. 1a into the curved travelling state as shown in Fig. 1b or 1c, the side edge of the conveyor belt 2 on the inner side of the overlapping portion is sufficiently prevented from penetrating into the substance to be transferred, and the overlapping side edges and their proximity are also prevented from contacting the substance, thereby substantially securely preventing the substance from penetrating between the overlapping side edges of the conveyor belt 2.

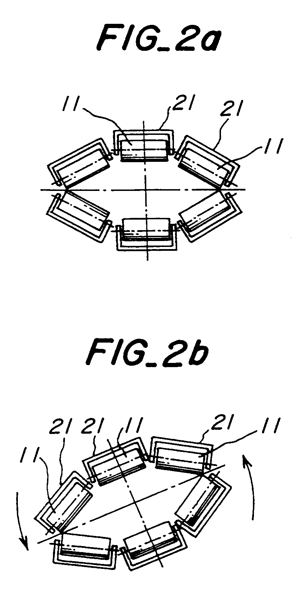

In order to change the vertical plane in which the curved running portion of a conveyor is curved to a plane inclined at an angle to the vertical plane, it is preferable that all the shape-holding rollers 11 set for the curved running portion in the vertical plane by means of brackets 21 for the rollers 11 (Fig. 2a) are rotated through a predetermined angle about a required rotating axis, for example the center axis of the space surrounded by the rollers 11, while the relative positional relations between the rollers 11 are maintained unchanged as shown in Fig. 2b. The operation time can be remarkably reduced in this manner in comparison with the case that the six shape-holding rollers are newly positioned and set one by one for applying the conveyor belt to the inclined state. In this case, the overlapping width of the side edges of the conveyor belt 2 can of course be maintained equal to that of the straight portion of the conveyor belt 2.

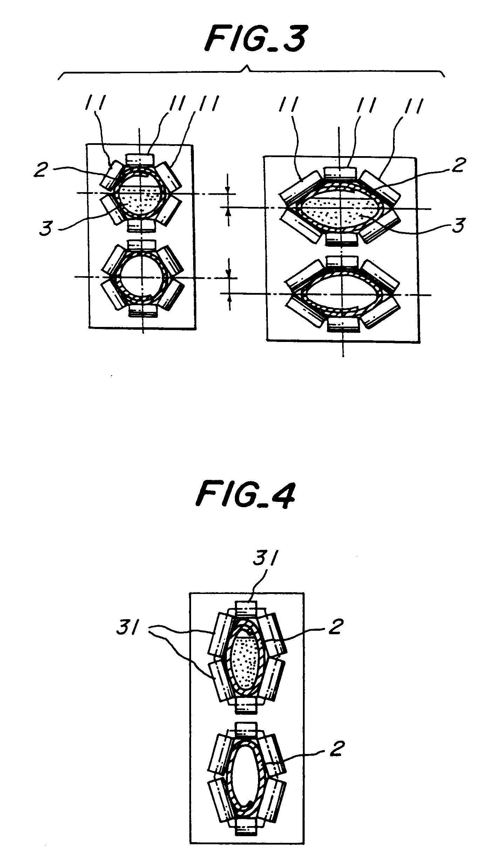

In the case that the conveyor belt 2 is curved downward viewed in the curving direction, the centers of the spaces surrounded by the shape-holding rollers 11 (shown on the right hand in Fig. 3) are positioned somewhat lower than those of the straight portions of the conveyor belt 2 (shown on the left hand in Fig. 3). In contrast herewith, if the conveyor belt 2 is curved upward, the centers of the spaces are positioned somewhat higher than those of the straight portions of the conveyor belt 2.

Fig. 4 illustrates an arrangement of shape-holding rollers 31 of a conveyor curved in a horizontal plane. With this conveyor, the distance between two shape-holding rollers 31 on the left side and two shaped-holding rollers 31 on the right side of the conveyor belt 2 is narrowed to an extent to prevent any separation of the outer portion of the conveyor belt 2 at the curved running portion from the shape-holding rollers 31, while the distance between the upper and lower shape-holding rollers 31 parallel to each other is so selected that the overlapping width of the side edges of the conveyor belt 2 is substantially equal to that of the straight portion of the conveyor belt 2. It is possible in this manner to prevent the overlapping portion at the top of the conveyor belt 2 flattened in horizontal directions from penetrating into the substance to be transferred and to prevent the overlapping portion and its proximity from closely contacting the substance, thereby completely preventing the substance from penetrating between the overlapping portion of the conveyor belt 2.

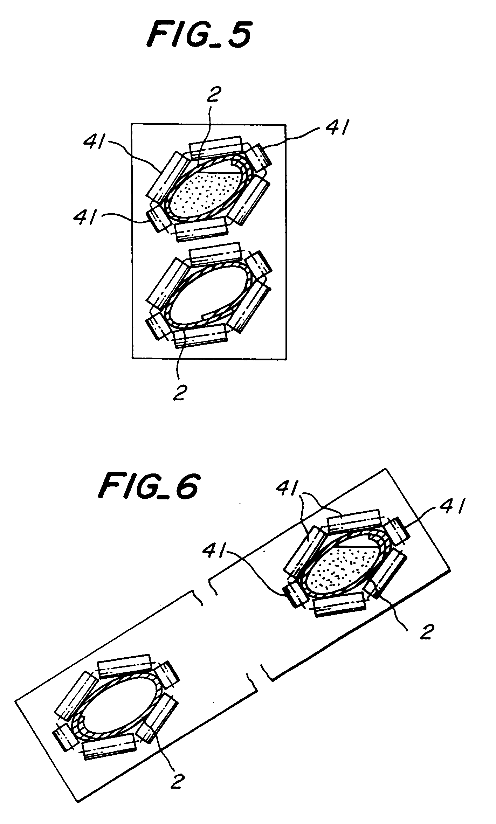

Fig. 5 illustrates another example of the conveyor belt 2 curved in an inclined plane. In this case, two shape-holding rollers 41 parallel to each other are arranged such that their axes are perpendicular to the inclined plane, and the distance between two shape-holding rollers 41 on one side and two shaped-holding rollers 41 on the other side of the conveyor belt 2 is narrowed to an extent to prevent any separation of the outer portion of the conveyor belt 2 at the curved running portion from the shape-holding rollers 41. Further, the distance between the two shape-holding rollers 41 parallel to each other is so selected that the overlapping width of the side edges of the conveyor belt 2 is substantially equal to that of the straight portion of the conveyor belt 2. In this manner, it is likewise possible to prevent the overlapping portion from penetrating into the substance to be transferred and hence to prevent the substance from penetrating between the side edges of the overlapping portion of the conveyor belt 2.

Fig. 6 illustrates a further embodiment of the conveyor curved in an inclined plane. In this embodiment, an arrangement of rollers 41 at a curved running portion is the same as that of Fig. 5, but transfer and return running portions of the conveyor are arranged in parallel in the same inclined plane.

As can be seen from the above description, according to the invention it is possible to prevent a substance to be transferred from penetrating between overlapping side edges of the conveyor belt by always maintaining constant the overlapping width of the conveyor belt, thereby sufficiently preventing the substance from falling and scattering out of the conveyor belt.

While the invention has been particularly shown and described with reference to preferred embodiments thereof, it will be understood by those skilled in the art that various modifications can be made therein without departing from the scope of the invention, which is defined by the claims.

## Claims

1. A method of using a cylindrical conveyor having straight running portions and curved running portions, the conveyor belt (2) of which is provided with a plurality of shape-holding rollers (1,11;31;41) to be held in a cylindrical form with overlapped side edges of the conveyor belt, and is driven in a shape having straight portions and curved portions characterized in that the length of a surrounding contour line in cross-section of the conveyor belt around a substance (3) to be transferred is maintained substantially constant at any portion of the conveyor.

2. A method as claimed in claim 1, characterized in that two upper and lower shape-holding rollers (11) at the curved running portion of the conveyor are arranged in parallel with and closer to each other than the distance between two upper and lower shape-holding rollers (1) at the straight running portion of the conveyor.

3. A method as claimed in claim 2, characterized in that the length of and distance between the two upper and lower shape-holding rollers, intersecting angles of axes of the adjacent shape-holding rollers with those of the upper and lower rollers and positions of these rollers are so selected that the conveyor belt (2) is not separated from the upper shape-holding roller by an additional tensile force acting on the outer curved running portion of the conveyor.

4. A method as claimed in claim 1, characterized in that two shape-holding rollers (11) on left and right sides of the conveyor belt at the curved running portion are arranged in parallel with and closer to each other than the distance between two upper and lower rollers (1) at the straight running portion so that a polygonal space surrounded by the shape-holding rollers is flattened in horizontal directions.

5. A method as claimed in claim 4, characterized in that positions and angles of the shape-holding rollers are selected so that the length of the surrounding contour line around the substance (3) is kept substantially constant.

6. A method as claimed in claim 1, characterized in that, when a plane in which the running portion of the conveyor is curved is changed to another plane, all the shape-holding rollers (11) set for the initial plane by means of brackets (21) for the shape-holding rollers are rotated through a predetermined angle about an axis, while the relative positional relations between the shape-holding rollers are maintained unchanged.

7. A method as claimed in claim 1, characterized in that when the conveyor belt (2) is curved downward viewed in the curving direction, the centers of the spaces surrounded by the shape-holding rollers (11) are positioned somewhat lower than those of the straight running portions of the conveyor.

8. A method as claimed in claim 1, characterized in that when the conveyor belt (2) is curved upward viewed in the curving direction, the centers of the spaces surrounded by the shape-holding rollers (11) are positioned somewhat higher than those of the straight running portions of the conveyor.

9. A method as claimed in claim 1, characterized in that when the conveyor is curved in a substantially horizontal plane, the distance between two shape-holding rollers (31) on the left side and two shape-holding rollers on the right side of the conveyor belt (2) is narrowed to an extent to prevent any separation of the outer portion of the conveyor belt at the curved running portion from the shape-holding rollers, while the distance between the upper and lower shape-holding rollers (31) parallel to each other is selected so that the overlapping width of side edges of the conveyor belt at the curved running portion is substantially equal to that of the straight running portion of the conveyor.

10. A method as claimed in claim 1, characterized in that when the conveyor belt (2) is curved in an inclined plane, two shape-holding rollers (41) parallel to each other are arranged whose axes are perpendicular to the inclined plane, and the distance between the two shape-holding rollers parallel to each other is selected so that the overlapping width of side edges of the conveyor belt is substantially equal to that of the straight running portion of the conveyor, and the distance between two shape-holding rollers (41) on one side and two shape-holding rollers on the other side of the conveyor belt is narrowed to an extent to prevent any separation of the outer portion of the conveyor belt at the curved running portion from the shape-holding rollers.

## Patentansprüche

1. Verfahren für die Benutzung eines Schlauchförderers, der geradlinig verlaufende Abschnitte und gekrümmt verlaufende Abschnitte aufweist, wobei das Förderband (2) dieses mit einer Vielzahl von formhaltenden Rollen (1, 11; 31; 41) versehen ist, die in einer Schlauchform mit den sich überdeckenden Seitenrändern des Förderbandes gehalten werden, und in einer Form, die geradlinige und gekrümmte Abschnitte aufweist, angetrieben wird, dadurch gekennzeichnet, daß die Länge der Umrißlinie im Querschnitt des Förderbandes um eine zu transportierende Substanz (3) herum im wesentlichen in jedem Abschnitt des Förderers konstant gehalten wird.

2. Verfahren nach Anspruch 1, dadurch gekennzeichnet, daß die zwei oberen und unteren formhaltenden Rollen (11) im gekrümmt verlaufenden Abschnitt des Förderers parallel zueinander und dichter beieinander angeordnet werden als der Abstand zwischen den zwei oberen und unteren formhaltenden Rollen (1) im geradlinig verlaufenden Abschnitt des Förderers ist.

3. Verfahren nach Anspruch 2, dadurch gekennzeichnet, daß die Länge der und der Abstand zwischen den zwei oberen und unteren formhaltenden Rollen, die Schnittwinkel der Achsen der benachbarten formhaltenden Rollen mit denen der oberen und unteren Rollen und die Positionen dieser Rollen so ausgewählt werden, daß das Förderband (2) nicht von der oberen formhaltenden Rolle durch eine zusätzliche Zugkraft getrennt wird, die auf den äußeren gekrümmt verlaufenden Abschnitt des Förderbandes wirkt.

4. Verfahren nach Anspruch 1, dadurch gekennzeichnet, daß die zwei formhaltenden Rollen (11) auf der linken und rechten Seite des Förderbandes im gekrümmt verlaufenden Abschnitt parallel zueinander und dichter beieinander angeordnet werden als der Abstand zwischen den zwei oberen und unteren Rollen (1) im geradlinig verlaufenden Abschnitt ist, so daß ein polygonaler Raum, der durch die formhaltenden Rollen umgeben wird, in den horizontalen Richtungen abgeflacht wird.

5. Verfahren nach Anspruch 4, dadurch gekennzeichnet, daß die Positionen und Winkel der formhaltenden Rollen so ausgewählt werden, daß die Länge der Umrißlinie um die Substanz (3) herum im wesentlichen konstant gehalten wird.

6. Verfahren nach Anspruch 1, dadurch gekennzeichnet, daß, wenn eine Ebene, in der der verlaufende Abschnitt des Förderers gekrümmt ist, in eine andere Ebene geändert wird, alle formhaltenden Rollen (11), die für die Ausgangsebene mittels der Halterungen (21) für die formhaltenden Rollen eingestellt wurden, um einen vorgegebenen Winkel um eine Achse herum gedreht werden, während die relativen Positionsbeziehungen zwischen den formhaltenden Rollen unverändert bleiben.

7. Verfahren nach Anspruch 1, dadurch gekennzeichnet, daß, wenn das Förderband (2) nach unten gekrümmt wird, wenn in der Krümmungsrichtung gesehen wird, die Mittelpunkte der Räume, die von den formhaltenden Rollen (11) umgeben werden, etwas niedriger als jene der geradlinig verlaufenden Abschnitte des Förderers angeordnet werden.

8. Verfahren nach Anspruch 1, dadurch gekennzeichnet, daß, wenn das Förderband (2) nach oben gekrümmt wird, wenn in der Krümmungsrichtung gesehen wird, die Mittelpunkte der Räume, die von den formhaltenden Rollen (11) umgeben werden, etwas höher als jene der geradlinig verlaufenden Abschnitt des Förderers angeordnet werden.

9. Verfahren nach Anspruch 1, dadurch gekennzeichnet, daß, wenn der Förderer in einer im wesentlichen horizontalen Ebene gekrümmt wird, der Abstand zwischen zwei formhaltenden Rollen (31) auf der linken Seite und zwei formhaltenden Rollen auf der rechten Seite des Förderbandes (2) in einem Ausmaß enger wird, daß eine Trennung des äußeren Abschnittes des Förderbandes im gekrümmt verlaufenden Abschnitt von den formhaltenden Rollen verhindert wird, während der Abstand zwischen den oberen und unteren formhaltenden Rollen (31) parallel zueinander so ausgewählt wird, daß die sich überdeckende Breite der Seitenränder des Förderbandes im gekrümmt verlaufenden Abschnitt im wesentlichen gleich der des geradlinig verlaufenden Abschnittes des Förderers ist.

10. Verfahren nach Anspruch 1, dadurch gekennzeichnet, daß, wenn das Förderband (2) in einer geneigten Ebene gekrümmt wird, zwei formhaltende Rollen (41) parallel zueinander angeordnet werden, wobei deren Achsen senkrecht zur geneigten Ebene verlaufen, und der Abstand zwischen den zwei formhaltenden Rollen parallel zueinander so ausgewählt wird, daß die sich überdeckende Breite der Seitenränder des Förderbandes im wesentlichen gleich der des geradlinig verlaufenden Abschnittes des Förderers ist, und der Abstand zwischen zwei formhaltenden Rollen (41) auf einer Seite und zwei formhaltenden Rollen auf der anderen Seite des Förderbandes in einem Ausmaß so enger wird, daß eine Trennung des äußeren Abschnittes des Förderbandes im gekrümmt verlaufenden Abschnitt von den formhaltenden Rollen verhindert wird.

## Revendications

1. Procédé d'utilisation d'un transporteur tubulaire ayant des parties mobiles rectilignes et des parties mobiles incurvées, dont la courroie transporteuse (2), équipée de plusieurs galets (1, 11; 31; 41) de maintien de forme, est maintenue sous une forme cylindrique, avec des bords latéraux de la courroie transporteuse qui se chevauchent, et qui est entraînée avec une forme ayant des parties rectilignes et des parties incurvées, caractérisé en ce que la longueur du pourtour environnant en section transversale de la courroie transporteuse autour d'une substance (3) à transporter est maintenue essentiellement constante dans toutes les parties du transporteur.

2. Procédé selon la revendication 1, caractérisé en ce que deux galets de maintien de forme (11) supérieurs et inférieurs dans la partie mobile incurvée du transporteur sont disposés parallèlement l'un à l'autre et plus proches l'un de l'autre que la distance entre deux galets de maintien de forme (1) supérieurs et inférieurs dans la partie mobile rectiligne du transporteur.

3. Procédé selon la revendication 2, caractérisé en ce que la longueur des deux galets de maintien de forme supérieurs et inférieurs et la distance entre eux, les angles d'intersection des axes des galets de maintien de forme voisins avec ceux des galets supérieurs et inférieurs et les positions de ces galets sont choisis de façon que la courroie transporteuse (2) ne soit pas séparée du galet de maintien de forme supérieur par une force de traction supplémentaire agissant sur la partie mobile incurvée extérieure du transporteur.

4. Procédé selon la revendication 1, caractérisé en ce que deux galets de maintien de forme (11) sur les côtés gauche et droit de la courroie transporteuse dans la partie mobile incurvée sont disposés parallèlement l'un à l'autre et plus proches l'un de l'autre que la distance entre deux galets supérieurs et inférieurs (1) dans la partie mobile rectiligne, de façon qu'un espace polygonal entouré par les galets de maintien de forme soit aplati en direction horizontale.

5. Procédé selon la revendication 4, caractérisé en ce que les positions et les angles des galets de maintien de forme soient choisis de façon que la longueur du pourtour environnant autour de la substance (3) soit maintenue essentiellement constante.

6. Procédé selon la revendication 1, caractérisé en ce que, si un plan dans lequel la partie mobile du transporteur est incurvé est remplacée par un autre plan, tous les galets de maintien de forme (11), maintenus dans le plan initial au moyen d'étriers (21) pour les galets de maintien de forme, subissent une rotation selon un angle prédéterminé autour d'un axe, alors que les relations de position relative entre les galets de maintien de forme sont maintenues inchangées.

7. Procédé selon la revendication 1, caractérisé en ce que, si la courroie transporteuse (2) est incurvée vers le bas lorsqu'on regarde dans la direction de la courbure, les centres des espaces entourés par les galets de maintien de forme (11) sont positionnés un peu plus bas que ceux des parties mobiles rectilignes du transporteur.

8. Procédé selon la revendication 1, caractérisé en ce que, si la courroie transporteuse (2) est incurvée vers le haut lorsqu'on regarde dans la direction de la courbure, les centres des espaces entourés par les galets de maintien de forme (11) sont positionnés un peu plus haut que ceux des parties mobiles rectilignes du transporteur.

9. Procédé selon la revendication 1, caractérisé en ce que, si le transporteur est incurvé dans un plan essentiellement horizontal, la distance entre deux galets de maintien de forme (31) sur le côté gauche et deux galets de maintien de forme sur le côté droit de la courroie transporteuse (2) est diminuée dans une mesure telle qu'elle empêche toute séparation de la partie extérieure de la courroie transporteuse dans la partie mobile incurvée par rapport aux galets de maintien de forme, alors que la distance entre les galets de maintien de forme supérieurs et inférieurs (31) parallèles les uns aux autres est choisie de façon que la largeur du chevauchement des bords latéraux de la courroie transporteuse dans la partie mobile incurvée soit essentiellement égale à celle de la partie mobile rectiligne du transporteur.

10. Procédé selon la revendication 1, caractérisé en ce que, si la courroie transporteuse (2) est incurvée dans un plan incliné, deux galets de maintien de forme (41) parallèles l'un à l'autre sont disposés avec leurs axes perpendiculaires au plan incliné, et la distance entre les deux galets de maintien de forme parallèles l'un à l'autre est choisie de façon que la largeur de chevauchement des bords latéraux de la courroie transporteuse soit essentiellement égale à celle de la partie mobile rectiligne du transporteur, et que la distance entre deux galets de maintien de forme (41) sur un côté et deux galets de maintien de forme sur l'autre côté de la courroie transporteuse soit diminuée dans une mesure permettant d'empêcher toute séparation de la partie extérieure de la courroie transporteuse dans la partie mobile incurvée par rapport aux galets de maintien de forme.
